(19) **Europäisches Patentamt / European Patent Office / Office européen des brevets**

(11) **EP 4 145 406 B1**

(12) **EUROPEAN PATENT SPECIFICATION**

(45) Date of publication and mention
of the grant of the patent:
**18.03.2026 Bulletin 2026/12**

(21) Application number: **21194430.1**

(22) Date of filing: **01.09.2021**

(51) International Patent Classification (IPC):
**G06V 20/56** (2022.01)       **G06V 10/82** (2022.01)
**G06V 10/44** (2022.01)

(52) Cooperative Patent Classification (CPC):
**G06V 20/588; G06V 10/454; G06V 10/82**

(54) **SURFACE IDENTIFICATION METHOD AND SYSTEM, TRAINING METHOD AND SYSTEM FOR THE SURFACE IDENTIFICATION SYSTEM, COMPUTER PROGRAM, COMPUTER-READABLE MEDIUM**

VERFAHREN UND SYSTEM ZUR OBERFLÄCHENERKENNUNG, TRAININGSVERFAHREN UND SYSTEM FÜR DAS OBERFLÄCHENERKENNUNGSSYSTEM, COMPUTERPROGRAMM, COMPUTERLESBARES MEDIUM

PROCÉDÉ ET SYSTÈME D'IDENTIFICATION DE SURFACE, PROCÉDÉ ET SYSTÈME D'APPRENTISSAGE POUR LE SYSTÈME D'IDENTIFICATION DE SURFACE, PROGRAMME INFORMATIQUE, SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2023 Bulletin 2023/10**

(73) Proprietors:
• **TOYOTA JIDOSHA KABUSHIKI KAISHA**
**Toyota-shi, Aichi-ken, 471-8571 (JP)**
• **Czech Technical University in Prague**
**16627 Praha 6 (CZ)**

(72) Inventors:
• **CHUMERIN, Nikolay**
**1140 BRUSSELS (BE)**
• **AL JUNDI, Rahaf**
**1140 BRUSSELS (BE)**
• **OLMEDA REINO, Daniel**
**1140 BRUSSELS (BE)**
• **VOJIR, Tomas**
**16627 PRAGUE 6 (CZ)**
• **MATAS, Jiri**
**16627 PRAGUE 6 (CZ)**

(74) Representative: **Cabinet Beau de Loménie**
**103, rue de Grenelle**
**75340 Paris Cedex 07 (FR)**

(56) References cited:
• **GIANCARLO DI BIASE ET AL: "Pixel-wise Anomaly Detection in Complex Driving Scenes", ARXIV.ORG, CORNELL UNIVERSITY LIBRARY, 201 OLIN LIBRARY CORNELL UNIVERSITY ITHACA, NY 14853, 9 March 2021 (2021-03-09), XP081908513**
• **KRZYSZTOF LIS ET AL: "Detecting Road Obstacles by Erasing Them", ARXIV.ORG, CORNELL UNIVERSITY LIBRARY, 201 OLIN LIBRARY CORNELL UNIVERSITY ITHACA, NY 14853, 8 April 2021 (2021-04-08), XP081927928**
• **FONTANEL DARIO ET AL: "Detecting Anomalies in Semantic Segmentation with Prototypes", 2021 IEEE/CVF CONFERENCE ON COMPUTER VISION AND PATTERN RECOGNITION WORKSHOPS (CVPRW), IEEE, 19 June 2021 (2021-06-19), pages 113 - 121, XP033967545, DOI: 10.1109/CVPRW53098.2021.00021**
• **VOJIR TOMAS ET AL: "Road Anomaly Detection by Partial Image Reconstruction with Segmentation Coupling", 11 October 2021 (2021-10-11), XP055891875, Retrieved from the Internet <URL:https://openaccess.thecvf.com/content/ICCV2021/papers/Vojir_Road_Anomaly_Detection_by_Partial_Image_Reconstruction_With_Segmentation_Coupling_ICCV_2021_paper.pdf> [retrieved on 20220215]**

**Description**

FIELD OF THE DISCLOSURE

The present disclosure is related to methods and systems for identifying, in an image which shows a scene, and in which a certain type of surface is shown, for instance a road surface, which pixels of the image represent said surface, and to distinguish these pixels (hereinafter, 'surface pixels") from the other pixels of the image, the 'non-surface pixels'. For these methods and systems, a main challenge is to reliably identify, in the image, the objects of any type, also called anomalies, which may be present on the surface but actually are not part of the surface, and consequently must not be identified as forming part of the surface.
A main application of these methods and systems is, in the field of autonomous driving, to identify the surface of the road, on which the vehicle can drive (the driveable surface). The proposed methods and systems however can be used for many other applications. The considered surface can be for instance the surface of the sea, etc., and more generally, any surface on or above which a vehicle or a robot, for instance an autonomous vehicle, is moving.

BACKGROUND OF THE DISCLOSURE

Numerous methods have been developed in order to detect the driveable surface on which road vehicles can drive, based on camera images acquired by front cameras of the vehicles. Some methods have also been developed in particular to detect anomalies on surfaces, such as the method proposed by Ref.[1] cited below.
For instance, Ref.[13] cited below discloses detecting anomalies in a base image based on a specific list of input variables, this list consisting of a semantic segmentation, a synthetized image realistically representing the initial image, a softmax entropy map, a softmax distance map, a perceptual difference map (all being calculated based on the base image), as well as the base image.
However, consistently and reliably detecting the road surface, and in particular correctly detecting the objects - or any kind of unknown elements - present on the surface is a challenging task.
Consequently, there remains a need for systems and methods which are capable of analysing images so as to reliably identify, in these images, the pixels of these images which actually represent said surface, in particular without including any anomalies possibly present on the surface.
The following references disclose various technologies related to image analysis or segmentation, in particular in the field of anomaly detection:

[1] Jinwon An and Sungzoon Cho. Variational autoencoder based anomaly detection using reconstruction probability. Special Lecture on IE, 2(1):1-18, 2015.
[2] Petra Bevandic, Ivan Kreso, Marin Orsic, and Sinisa Segvic. Simultaneous Semantic Segmentation and Outlier Detection in Presence of Domain Shift. In Pattern Recognition, pages 33-47. Springer International Publishing, 2019.
[3] H. Blum, P. Sarlin, J. Nieto, R. Siegwart, and C. Cadena. Fishyscapes: A Benchmark for Safe Semantic Segmentation in Autonomous Driving. In 2019 IEEE/CVF International Conference on Computer Vision Workshop (ICCVW), pages 2403-2412, 2019.
[4] L. Chen, G. Papandreou, I. Kokkinos, K. Murphy, and A. L. Yuille. DeepLab: Semantic Image Segmentation with Deep Convolutional Nets, Atrous Convolution, and Fully Connected CRFs. IEEE Trans. Pattern Anal. Mach. Intell., 40(4):834-848, 2018.
[5] M. Cordts, M. Omran, S. Ramos, T. Rehfeld, M. Enzweiler, R. Benenson, U. Franke, S. Roth, and B. Schiele. The Cityscapes Dataset for Semantic Urban Scene Understanding. In IEEE Conf. Comput. Vis. Pattern Recog., 2016.
[6] C. Creusot and A. Munawar. Real-time small obstacle detection on highways using compressive RBM road reconstruction. In IEEE Intelligent Vehicles Symposium (IV), pages 162-167, 2015.
[7] K. He, X. Zhang, S. Ren, and J. Sun. Deep Residual Learning for Image Recognition. In IEEE Conf. Comput. Vis. Pattern Recog., pages 770-778, 2016.
[8] Krzysztof Lis, Sina Honari, Pascal Fua, and Mathieu Salzmann. Detecting Road Obstacles by Erasing Them, 2020.
[9] K. Lis, K. Nakka, P. Fua, and M. Salzmann. Detecting the Unexpected via Image Resynthesis. In Int. Conf. Comput. Vis., October 2019.
[10] P. Pinggera, S. Ramos, S. Gehrig, U. Franke, C. Rother, and R. Mester. Lost and Found: detecting small road hazards for self-driving vehicles. In International Conference on Intelligent Robots and Systems (IROS), 2016.
[11] Z. Wang, E. P. Simoncelli, and A. C. Bovik. Multiscale structural similarity for image quality assessment. In The Thirty-Seventh Asilomar Conference on Signals, Systems Computers, 2003, volume 2, pages 1398-1402 Vol.2, 2003.
[12] Y. Zhu, K. Sapra, F. A. Reda, K. J. Shih, S. Newsam, A. Tao, and B. Catanzaro. Improving Semantic Segmentation via Video Propagation and Label Relaxation. In IEEE Conf. Comput. Vis. Pattern Recog., June 2019.

[13] Di Biase, Giancarlo, et al. "Pixel-wise anomaly detection in complex driving scenes." Proceedings of the IEEE/CVF conference on computer vision and pattern recognition. 2021.

SUMMARY OF THE DISCLOSURE

In view of the above-mentioned problem, the objective of the present disclosure is to propose methods and systems which are capable of analysing images so as to reliably identify, in these images, the pixels of these images which actually represent a certain surface shown by the image, in particular without including anomalies possibly present on that surface.

In order to meet the above purpose, the computer-implemented surface identification method as defined in claim 1 is proposed.

The surface pixels datum is usually a map.

In this method, the reconstructed scene image is a reconstructed version of the scene image, which in most cases resembles the scene image.

As mentioned above, the segmentation is a datum, usually a map, in which the pixels of the scene image are classified into predetermined categories. These categories themselves are classified in two groups: the surface categories, and the non-surface categories. The 'surface categories' are categories for semantic elements of the scene image which belong to the surface. The 'non-surface categories' are categories for semantic elements of the scene image which do not belong to the surface.

For instance, if the scene image is a scene representing an urban environment and the surface which has to be identified is the surface of the road, the surface categories could be 'asphalt surfaces', 'concrete surface' (with the road surface being made either of asphalt or concrete), and the non-surface categories could be 'ego-vehicle' comprising the pixels which represent a vehicle on which the surface identification system is mounted, 'environment' representing all objects surrounding the vehicle except the road surface, and 'sky', representing the sky.

Consequently, based on the segmentation, the scene image pixels are classified (or can be classified) as belonging to a surface category or a non-surface category.

The segmentation predicted at step S30 is predicted (that is, calculated) without applying a normalization function. Indeed, normalizing the segmentation causes a loss of information and consequently may decrease the performance of the surface identification method.

For instance, if the segmentation is calculated using a deep neural network, the segmentation can be the logits of the neural network, that is, the raw output of the last (or last but one) layer of the neural network, before applying a normalization operation (such as Softmax or Argmax).

In the present disclosure, the following notations or conventions are used:
The word 'term', even in the singular form, may refer to a sum of a plurality of terms.

An image is a tensor having three dimensions or more, in which two dimensions are referred to generally as the width and height of the image, while the other dimension(s) are called the channel(s) of the image.

A map is a calculated image.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

Different functions can be used to calculate the reconstruction error map at step S50.

For instance, in some embodiments, at the reconstruction error map calculation step S50, the reconstruction error for a pixel is calculated by comparing pixel values for a first sub-image of the reconstructed scene image centered on the considered pixel and pixel values for a corresponding, second sub-image of the scene image also centred on the considered pixel. By calculating the reconstruction error in this way, the performance of the method can be improved.

The performance of the method can also be improved by performing a differentiable trainable transformation during the reconstructed scene image calculation step S40, in particular a differentiable trainable transformation which includes spatial pyramid pooling, and/or which includes atrous convolutions. The original meaning of the adjective 'atrous' is explained in Ref.[4].

An atrous convolution applied to an image is a convolution based on a kernel defined in the image by a predetermined height and a predetermined width relative to the image, and the atrous convolution is calculated based only on a strict subset of the pixels of the kernel (that is, not all pixels of the kernel are used to calculate the atrous convolution).

In particular, in some atrous convolutions, the pixels of the convolution kernel may be spaced by a dilation factor (this factor being greater than or equal to 1). In other words, in the height and/or width direction of the image, the pixels used to calculate the atrous convolution may be separated from each other by non-utilized pixels, which are not used to calculate the atrous convolution.

It has been found indeed that performing a differentiable trainable transformation which includes such functions makes it possible to efficiently incorporate the information present in the scene image in the reconstructed scene image, and consequently to improve the performance of the method.

In some embodiments, the reconstruction module comprises:

- a neural network-based reconstruction encoder configured to perform a reconstruction latent feature calculation step (S42), in which a differentiable trainable transformation is performed so as to calculate a reconstruction latent feature; and

- a neural network-based reconstruction decoder configured to perform a final reconstructed scene image calculation step (S44) in which, based on the reconstruction latent feature, the reconstructed scene image is calculated.

Moreover, it has appeared that the performance of the surface identification method can be enhanced by using a reconstruction module comprising such a reconstruction encoder and reconstruction decoder, with the reconstruction encoder outputting a reconstruction latent feature having a small number of channels.

For this reason, the reconstruction encoder is preferably configured to output a reconstruction latent feature comprising not more than 8 channels, preferably not more than 4 channels.

The surface identification method of the present disclosure is implemented using a computer-implemented surface identification system.

In some embodiments, this surface identification system comprises a neural network-based semantic coupling module configured to perform the surface pixels datum calculation step (S60).

In this case, the surface identification system can be trained by a training method comprising joint end-to-end training of the reconstruction module and the semantic coupling module.

In some embodiments, the surface identification system comprises a neural network-based segmentation module, configured during step S20, to encode the scene image into the segmentation latent feature, and during step S30, to predict the segmentation.

In this case, during the joint end-to-end training step, the segmentation module may be frozen (that is, its parameters do not change during the end-to-end training step).

In some embodiments of the training method, the end-to-end training step is performed using at least an augmented scene image, which is an image based on a scene image and in which in at least one region representing the surface (at least one region of said scene image), the pixels of said at least one region have been replaced by pixels which do not represent the surface. In that case the end-to-end training step is further performed using information that said at least one region of the surface is composed of non-surface pixels.

In some embodiments of the training method, the end-to-end training step is performed using a loss function L comprising a reconstruction loss term $L_R$ calculated based on the reconstruction error map. In those embodiments, the reconstruction loss term may be defined so as during training, to minimize the reconstruction errors for surface pixels and to maximize the reconstruction errors for non-surface pixels.

It has appeared indeed that by training the surface identification system using a loss function comprising the above-mentioned reconstruction loss term $L_R$ makes it possible to efficiently detect non-surface pixels, since they form poorly reconstructed regions in the reconstructed scene image.

In some embodiments of the training method, the training step is performed using a loss function L comprising a cross entropy loss term.

In the surface identification methods proposed above, the segmentation, which comprises the information about the known regions of the image, is combined with the reconstruction error map, which is used for estimating previously unseen objects on the surface.

The segmentation, i.e., the information about the regions of the image which belong to known classes, may be outputted by a known segmentation module, for instance implemented by a deep neural network. The performance of such module to identify a surface (for instance, a road surface) is excellent on data close to the training distribution, but its behaviour on previously unseen data is variable, as experiments show.

Consequently, according to the present disclosure a reconstruction module is further used arguing, and experimentally verifying, that a failure to reconstruct a region of the scene image reliably and predictably is an indicator of an anomaly in that region.

In particular implementations, the proposed methods are determined by computer program instructions.

Accordingly, another purpose the present disclosure is to propose one or more computer program(s) comprising instructions which, when the instructions are executed by a computer, cause the computer to carry out the steps of one of the above-proposed surface identification methods, or the steps of one of the above-proposed training methods. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more computer program(s) as defined above stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure further includes a surface identification system for classifying pixels of a scene image showing a surface into surface pixels which represent the surface and non-surface pixels which do not represent the surface, wherein the surface identification system comprises one or more processors and a computer-readable medium; the computer-readable medium comprises computer instructions stored therein, wherein the instructions, when executed by the one or more processors, cause the one or more processors to carry out the steps of one of the surface identification methods presented above.

The present disclosure further includes a training system for training a surface identification system to classify pixels of a scene image showing a surface into surface pixels which represent the surface and non-surface pixels which do not represent the surface; wherein the training system comprises one or more processors and a computer-readable medium; the computer-readable medium comprises computer instructions stored therein, wherein the instructions, when executed by the one or more processors, cause the one or more processors to carry out the steps of one of the above-proposed training methods.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 is a schematic view showing a vehicle comprising a surface identification system and a remote server comprising a training system in accordance with the present disclosure;
Fig. 2 is a schematic representation of the surface identification system represented on Fig.1;
Fig. 3 is a schematic representation of a process for preparing an augmented scene image used for training a surface identification system according to the present disclosure;
Fig.4 is a block diagram illustrating the steps of a surface identification method according to the present disclosure;
Fig.5 is a schematic representation of a step S60 of calculating a reconstruction error map, performed during the method of Fig.4; and
Fig.6 is a schematic representation of a step S70 of calculating a surface pixels datum, performed during the method of Fig.4.

DESCRIPTION OF THE EMBODIMENTS

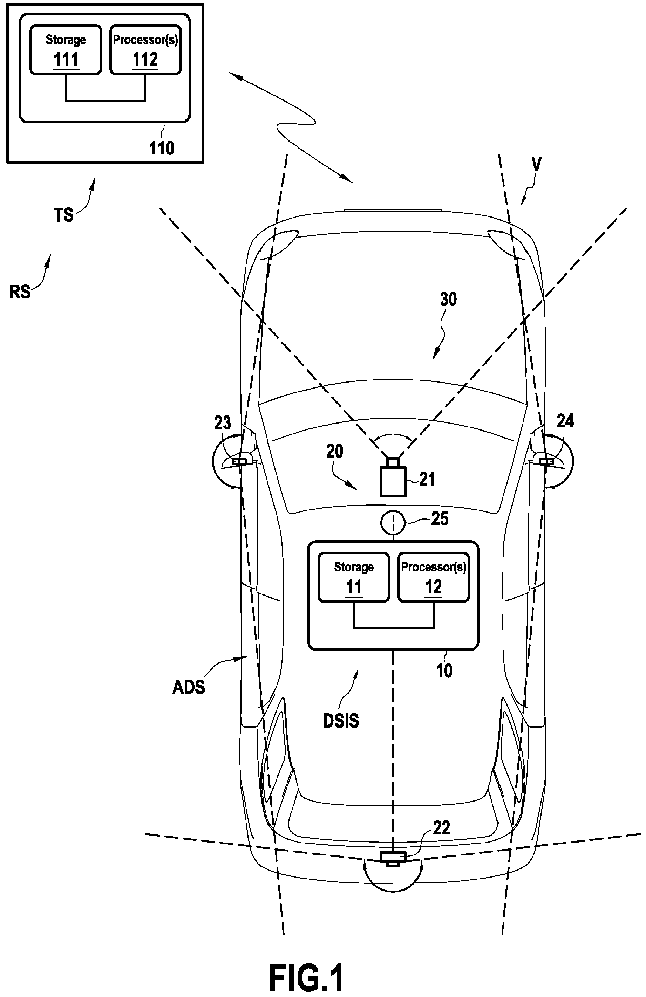

Surface identification methods and systems, and training methods and systems for training such surface identification systems which constitute exemplary embodiments of the present disclosure are now going to be presented in relation with Figs.1-6. Wherever possible, the same reference signs will be used throughout the figures to refer to the same or like parts or components.

As explained before, these methods and systems have been developed in order to analyse images showing a specific surface, in order to identify, in these images, which pixels correspond to that specific surface. In the present embodiment, the surface which has to be identified is the surface of the road on which a vehicle V is moving.

Vehicle V comprises an autonomous driving system ADS, which itself comprises a driveable surface identification system DSIS.

The ADS system comprises a set of sensors 20, each sensor being connected to computer 10, a set of actuators (not shown), and other components. The set of sensors 20 comprises in particular sensors configured to perceive an external environment of vehicle V, which include in particular a front camera 21, a rear camera 22, lateral cameras 23,24 and a roof-mounted lidar 25. The front camera 21 is configured to acquire images of the road ahead of vehicle V. These images, herein called 'scene images', show the scene ahead of vehicle V. Accordingly, part of these images represents the surface of the road.

These images constitute scene images si on which the surface of the road has to be identified to perform autonomous driving. Conversely, pixels which are not the surface of the road have to be identified as non-surface (or 'non-road') pixels.

When vehicle V is in operation, at each time step, the image si acquired by camera 21 is transmitted to the surface identification system DSIS. The identification system DSIS acquires this image si, identifies the pixels ('surface pixels') corresponding to the driveable road surface in this image, and outputs this result as a surface pixels map spm (as an example of a surface pixels datum). In that map, the remaining pixels are therefore classified as 'non-surface pixels'.

The driveable surface of the road as identified in the surface pixels map spm is transmitted to the autonomous driving system ADS. On this basis, the autonomous driving system ADS issues appropriate controls to drive vehicle V on the road.

Most of the components and functional units of the autonomous driving system ADS are on-board vehicle V; however, part of them can be remote components, and can be for instance part of a remote server RS. The remote server RS and vehicle V include not-shown communication means to exchange information.

The vehicle V is a car, which represents a non-limiting example of a device - in this case, a vehicle - which can utilize (for instance: which can be controlled based on) surface pixels data outputted by a surface identification system according to the present disclosure. In the embodiment presented here, the autonomous driving system ADS of vehicle V is configured to drive vehicle V on the driveable surface of the road, identified in the surface pixels map spm.

As it will be explained below, in the present embodiment the surface identification system DSIS is a trainable, neural network-based system.

For training purposes, the surface identification system DSIS is implemented initially on a training system TS implemented on the remote server RS.

The training system TS is configured to train the identification system DSIS, based on pre-existing training dataset(s). When the identification system DSIS is trained, it is deployed on vehicle V.

Then, in operation, when vehicle V is moving on a road, the surface identification system DSIS is used to identify the driveable surface of the road in real time in the images acquired by camera 21 and to transmit the successive surface pixels maps to the autonomous driving system ADS which on this basis drives vehicle V.

In vehicle V, the surface identification system DSIS is implemented on a central driving computer 10 ('computer 10') and actually, the functions of the surface identification system DSIS, as well as most functions of the autonomous driving system ADS, are implemented on computer 10.

Computer 10 comprises a non-transitory storage medium 11 and one or more processor(s) 12. The one or more processors 12 are intended to be representative of the presence of any one or more processors or processing devices, of any of a variety of forms. In addition, although computer 10 is represented on Fig.1 in a single box, it may be a distributed calculation system, comprising a plurality of processors, possibly physically arranged on different locations. For instance, part of processors 12 may be part of remote server RS.

The training system TS is configured to implement training methods according to the present disclosure.

The training system TS is implemented on the remote server RS. The training system TS is implemented on a main training computer 110 ('computer 110'), which comprises a non-transitory storage medium 111 and one or more processor(s) 112. The one or more processors 112 are intended to be representative of the presence of any one or more processors or processing devices, of any of a variety of forms. In addition, although computer 110 is represented on Fig.1 in a single box, it may be a distributed calculation system, comprising a plurality of processors, possibly physically arranged on different locations.

A computer program $P_{TrSI}$ comprising instructions which, when they are executed by the processor(s) 112, cause these processor(s) to carry out the steps of training methods according to the present disclosure for training the surface identification system DSIS is stored in storage medium 111. A computer program $P_{SI}$ comprising instructions which, when they are executed by the processor(s) 12, cause these processor(s) to carry out the steps of a surface identification method used to identify the driveable surface of the road ahead of vehicle V by implementing the surface identification system DSIS, is stored in storage medium 11. The programs $P_{TrSI}$ and $P_{SI}$ and the storage media 111 and 11, are examples respectively of computer programs and computer-readable recording media according to the present disclosure. The training program $P_{TrSI}$ is executed to train the driveable surface identification system DSIS, while the surface identification program $P_{SI}$ is executed to identify the surface pixels in the scene image showing the road ahead of vehicle V.

The memories 111, 11 of the computers 110, 10 constitute non-volatile recording media according to the present disclosure, readable respectively by the one or more processor(s) 112, 12 and on which the programs $P_{TrSI}$ and $P_{SI}$ are recorded.

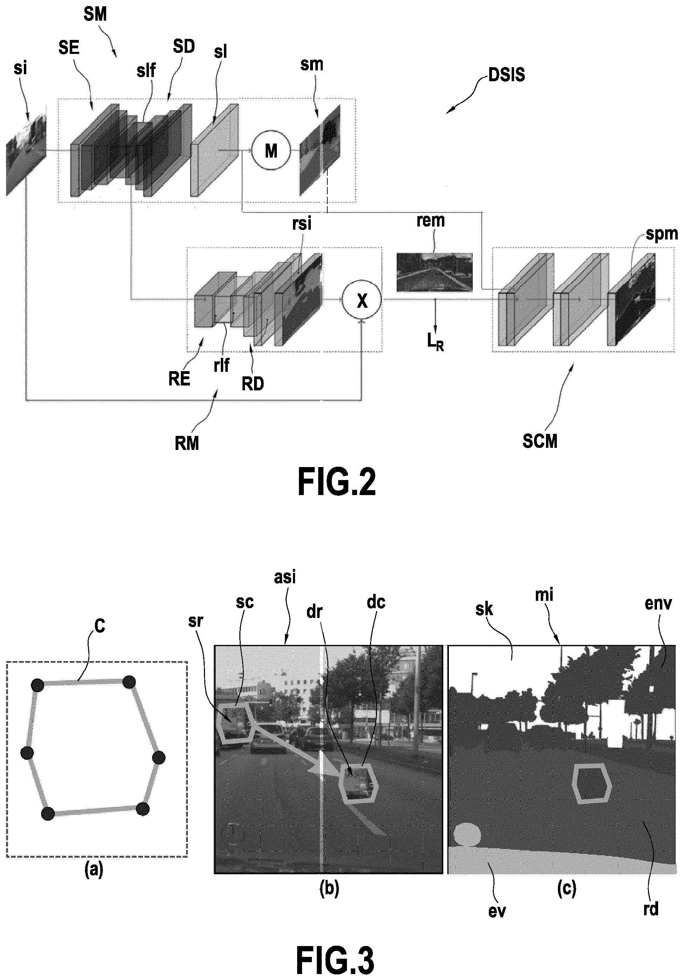

An exemplary functional architecture of the surface identification system DSIS is now going to be presented in relation with Fig.2.

The surface identification system DSIS mainly comprises a Segmentation Module SM, a Reconstruction Module RM and a Semantic Coupling Module SCM (each of these modules comprises a neural network), and a comparison unit X.

The segmentation module SM is a neural network configured to input a scene image si, and, based on this input, to output a segmentation map sm.

The scene image si is typically an image of a scene in which a specific surface, for instance the surface of a road, has to be detected. This specific surface can be any outer surface of an object (a real object). The scene image si is typically an image acquired by a camera, for instance, in the proposed embodiment, the front camera 21 of vehicle V. However, this image can also be a pre-processed image, it can be obtained by merging or based on multiple images or multiple data (including for instance lidar and/or radar data), etc.

The segmentation module SM comprises a segmentation encoder SE and a segmentation decoder SD.

The segmentation encoder SE is a neural network configured to input the scene image si and encode it into a segmentation latent feature slf.

The segmentation decoder SD is a neural network configured to input the segmentation latent feature slf and decode it so as to output the segmentation.

The segmentation is a datum in which the pixels are classified into a certain number of semantic classes (or categories). Among the semantic classes, at least one class corresponds to surface pixels, and at least one class corresponds to non-surface pixels. (No class may comprise surface pixels and non-surface pixels).

In the present embodiment for instance, these classes are:

- a single surface category, the road surface category rd, comprising the road surface pixels;
- three non-surface categories: (1) the 'ego-vehicle' category ev, in which the pixels representing the vehicle on which the surface identification system is mounted are classified; (2) the environment category env, representing the environment of vehicle (the curb, the other vehicles, the surrounding buildings, etc.); and (3) the sky category sk.

The segmentation module SM does not directly output the segmentation map sm, but first outputs non-normalized segmentation logits sl (which are also the logits of the segmentation decoder SD).

The most downstream layer of the segmentation decoder SD is a normalization module M. This normalization modules applies a normalization operation such as Softmax or Argmax to the segmentation logits sl of the segmentation decoder SD, and thereby outputs the segmentation map sm.

With the meaning of the present document, the segmentation used to calculate the surface pixels image (spm) at step S60 is preferably the segmentation logits sl. However, in other embodiments which are not claimed as such, the segmentation can also be the segmentation map sm (this latter case is illustrated by the dotted link below the sm map on Fig.1).

The reconstruction module RM is a neural network configured to input the segmentation latent feature slf, and, based on this input, to reconstruct the scene image si so as to output a reconstructed scene image rsi.

The comparison unit X is configured to input the scene image si and the reconstructed scene image rsi. On this basis, the comparison unit X calculate a reconstruction error map rem. In this map, each pixel represents an error Err, for the considered pixel, between the reconstructed scene image rsi and the scene image si.

The goal of the reconstruction module RM is to learn the appearance of the road (to learn to identify the driveable surface of the road) in a discriminative way. In other words, the reconstruction module has to learn to output a reconstructed scene image rsi in which the pixels of the road (the surface pixels) generate a minimal reconstruction error in the reconstruction error map rem, while the non-surface pixels generate a large reconstruction error.

The reconstruction module RM is implemented as a deep neural network, which receives the segmentation latent feature slf outputted by the segmentation encoder as an input. In the present embodiment, it comprises two parts: a neural network-based reconstruction encoder RE and a reconstruction decoder RD.

In the present embodiment, the reconstruction encoder RE is configured to perform atrous convolutions so as to achieve spatial pyramid pooling.

That is, in order to perform spatial pyramid pooling, based on a scene image si inputted to the surface identification system DSIS, the reconstruction encoder is configured to calculate several resampled images, at different (height and width) resolutions.

In the present embodiment, the reconstruction encoder RE calculates the resampled images (or possibly part of them) by performing atrous convolutions. It makes it possible for a pixel of a resampled image, since it is obtained by an atrous convolution, to incorporate information based on a broader kernel than if it were obtained by a usual, non-dilated convolution. The reconstruction encoder RE can be configured to perform atrous spatial pyramid pooling in the same way as the neural network of Ref.[4].

In the atrous convolutions used to perform spatial pyramid pooling of the present embodiment, for instance, the size of the kernel is chosen equal to 1, 6, 12 and 18, as proposed by Ref.[4].

The reconstruction encoder RE usually (as in the case of the present embodiment) reduces the dimension of the segmentation latent features slf retrieved from the segmentation encoder SE and outputs a reconstruction latent feature rlf.

Thanks to the atrous convolutions performed to achieve spatial pyramid pooling, the reconstruction encoder RE exploits information from larger receptive fields, enabling the reconstruction latent feature to capture the appearance of the scene at different scales and to incorporate more contextual (spatial) information.

During training, the reconstruction module RM learns to incorporate in the reconstruction latent feature rlf the most appropriate features, on which the reconstruction decoder RD can then calculate the reconstructed image rsi as efficiently as possible.

The reconstruction decoder RD is configured to input the reconstruction latent feature rlf and, on this basis, to progressively upsample the feature channels and to reconstruct the scene image si, thus yielding a reconstructed scene image rsi. The reconstructed scene image rsi usually resembles the original scene image si. However, for some loss functions (depending in particular on the reconstruction term of the loss function), the reconstructed scene image rsi may appear visually different from the original scene image; however in all cases, the reconstructed scene image rsi will generate a small reconstruction error.

In the present embodiment, the reconstruction decoder RD comprises (and in the present embodiment, consists of) four convolutional blocks. Each block is configured to realize twice, in chain, the following operations: bilinear upsampling, 2D convolution, batch normalization, and ReLU (Rectified Linear Unit) activation function. The reconstruction decoder RD progressively reduces the number of feature channels down to finally three channels in the reconstructed scene image rsi (which, in the present embodiment, is an RBG image), at the output of the last convolution layer.

Accordingly, in the present embodiment the reconstruction decoder RD progressively reduces the number of feature channels by a factor of two starting from 128 channels (i.e., 128, 64, 32, 16). The reconstruction scene image rsi is produced by a final $1\times1$ convolutional layer which reduces the 16 channels to 3 channels.

Different functions can be implemented by the comparison unit X to calculate the reconstruction error Err.

For instance, for a considered channel, the reconstruction error Err can be obtaining based on an L2 norm between a pixel value for the scene image si and the corresponding pixel value for the reconstructed scene image rsi, for example using the following equation:

$$Err\,(\mathrm{x},\mathrm{y}) \;\; = \;\; (\,x_{si}\, - \,x_{rsi})^2 + (y_{si}\, - \,y_{rsi})^2$$

However, preferably, the reconstruction error is calculated not only based on a pixel value of the reconstructed scene image rsi and the corresponding pixel value of the scene image si, but by comparing pixel values for a first sub-image of the reconstructed scene image rsi centered on a considered pixel (x,y) and pixel values for a corresponding, second sub-image of the scene image si also centered on the considered pixel (x,y).

For instance, the error can be calculated based on mean and variance values of the pixel values in the first sub-image and mean and variance values of the pixel values in the second sub-image.

For instance, the reconstruction error Err between a scene image si and the corresponding reconstructed scene image rsi can be calculated, for each individual pixel (x,y), as:

$$Err\,(x,y)_{si,rsi} = \frac{(2\,\mu_{si}\mu_{rsi} + c_1)(2\sigma_{sirsi} + c_2)}{(\mu_{si}^2 + \mu_{rsi}^2 + c_1\,)(\sigma_{si}^2 + \sigma_{rsi}^2 + c_2)}$$

In the above equation, the reconstruction error Err at a pixel (x,y) between a scene image si and a reconstructed scene image rsi is calculated between a first sub-image of scene image si centered on pixel (x,y), and whose pixels have a mean $\mu_{si}$ and a variance $\sigma_{si}$, and a corresponding second sub-image, which is a sub-image of the reconstructed scene image rsi centered on pixel (x,y), and whose pixels have a mean $\mu_{rsi}$ and a variance $\sigma_{rsi}$. $\sigma_{sirsi}$ refers to the covariance between the scene image si and the reconstructed scene image rsi.

The equation includes two constants c1 and c2, both for numerical stability and to set the range of the calculated error.

In the present embodiment, to calculate the error Err using the above equation, the default values for c1 and c2 proposed by Ref.[11] can be used. The local window size can be set to 11 for the first and second sub-images. Accordingly, an $11 \times 11$ local window centered around each pixel location can be used to compute the average and variance values.

Advantageously, the reconstruction error Err calculated using the above equation takes into account not only the respective illumination and contrast of the two compared sub-images, but also models the structural dependencies of spatially close pixels, therefore being quite robust to imprecision in reconstructed illumination.

The above explanations and equations are given for one channel of the scene image si and the reconstructed scene image rsi. However, actually the reconstruction error is calculated for all the channels of the two compared images si and rsi. Preferably, the outputted errors calculated for all the channels are then averaged to obtain a final per-pixel error.

The segmentation coupling module SCM is configured as follows.

The segmentation coupling module is configured to input the segmentation (in the present embodiment: the segmentation logits sl) and the reconstruction error map rem.

The segmentation (sl) is channel-wise concatenated with the reconstruction error map rem.

The first input, the segmentation comprises the information relative to pixels identified as non-surface pixels by the segmentation module SM. These pixels indeed are pixels which have been identified during semantic segmentation as not representing the road, for instance representing the sky, a vehicle, etc. (e.g., identified as belonging to a known, non-surface class).

The second input, the reconstruction error map, identifies pixels which constitute "unknown anomalies". Although these anomalies normally do not belong to a known category used by the segmentation module, they can be discovered by the reconstruction module since they will appear as poorly reconstructed image regions.

Advantageously, by coupling of the two above-mentioned inputs (segmentation and reconstruction error map rem), the surface identification system DSIS can identify surface pixels not only belonging to known non-surface classes, but also non-surface pixels of unknown type (for instance corresponding to small isolated objects present on the road surface), which could often be misclassified by the segmentation module.

The concatenated data obtained by concatenating the segmentation logits sl with the reconstruction error map rem is inputted in the core part of the segmentation coupling module SCM, which comprises two convolutional blocks arranged in series.

Each of these convolutional blocks comprises a convolutional layer, a Batch normalization layer, and a ReLU layer. The first (upstream) block takes as the input the concatenation of the segmentation logits sl (which has 19 channels for the Cityscapes classes (see Ref.[5])) and the reconstruction error map rem (which has only 1 channel) and reduces the number of channels to 8 with the kernel size set to 3 and stride set to 1. The second block uses $1 \times 1$ convolution and outputs the surface pixels map spm.

The output of the segmentation coupling module SCM is the surface pixels map spm (an example of a surface pixels datum). This map spm has two channels corresponding to the surface class and non-surface class and is normalized by a softmax layer.

The first channel forms the "surface" image in which the surface pixels are set to 1 and the non-surface pixels to 0, and the second channel forms the non-surface image, in which the surface pixels are set to 0 and the non-surface pixels to 1. Accordingly, the pixels of the surface are identified in the surface image. Other structures can be chosen to constitute the surface pixels datum, as long as the pixels of the surface can be readily identified in this datum.

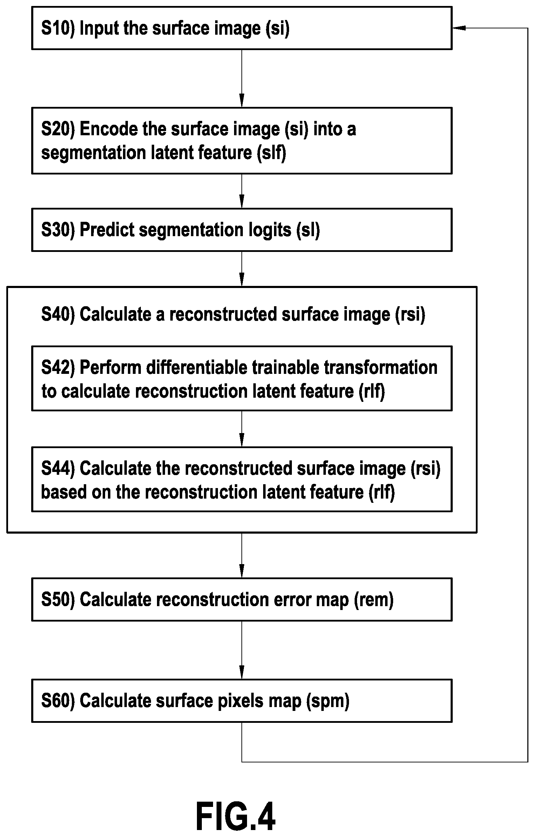

Fig.4 illustrates how a surface identification method according to the present disclosure can be performed using the driveable surface identification system DSIS.

First, a scene image si is inputted (step S10).

Then, the scene image si is passed through the segmentation encoder SE; thereby, a segmentation latent feature slf is calculated (step S20).

Then, on one hand, the segmentation latent feature slf is passed through the segmentation decoder SD: The segmentation logits sl are obtained (step S30). The segmentation logits constitute a segmentation in which the surface pixels are classified in surface categorie(s) which represent(s) the surface, while the non-surface pixels are classified in non-surface categorie(s).

Then, the segmentation latent feature slf is inputted to the reconstruction module RM, in order to calculate the reconstructed scene image rsi.

In this purpose, first the segmentation latent feature slf is inputted to the reconstruction encoder RE. The reconstruction encoder RE performs a differentiable trainable transformation and thereby calculates the reconstruction latent feature rlf. In the present embodiment, as explained before the reconstruction encoder RE applies atrous convolutions to the segmentation feature slf to calculate resampled scene images; the resampled scene images are then combined using spatial pyramid pooling to obtain the reconstruction latent feature rlf (sub-step S42).

Then, based on the reconstruction latent feature rlf, the reconstruction decoder RD calculates a reconstructed scene image rsi, which is a reconstructed version of the scene image si (Sub-step S42).

Then, based on the scene image si and the reconstructed scene image rsi, the comparison unit X calculates the reconstruction error map rem (step S50).

Then, the segmentation logits sl and the reconstruction error map rem are concatenated (other combination methods can be used), and on the basis of this combined information, an surface pixels map spm is calculated by the semantic coupling module SCM (step S60). The surface pixels map spm is structured so that its pixels (which correspond to pixels of the scene image si) are classified into surface pixels and non-surface pixels.

The driveable surface identification system DSIS is trained by end-to-end training using a loss function L.

Importantly, the end-to-end training may be in some embodiments the final stage of the training. In this case, prior training stage(s) may be performed beforehand, in particular to train or pre-train part(s) of the surface identification system DSIS. In particular, the training method may comprise an initial training step, during which the segmentation module SM is trained, independently of the remainder of the surface identification system DSIS.

Advantageously, an existing (in particular a neural network-based, pre-trained) segmentation module SM can be used. In other words, in order to implement a surface identification system according to the present disclosure, a reconstruction module can be coupled for instance to an "already in-use" semantic segmentation network; then, the reconstruction module and the segmentation coupling module can be trained jointly in order to obtain an operational surface identification system.

The end-to-end training step is performed using a loss function L which preferably is the weighted sum of two terms, namely a cross-entropy loss term $L_{xent}$ and a reconstruction loss term $L_R$.

In the proposed embodiment, the loss function L is obtained as:

$$L = L_{xent} + 0.5\ L_R$$

In the loss function L, the cross-entropy loss term $L_{xent}$, defined in order to efficiently train in particular the segmentation coupling module SCM, may be set as a standard binary cross-entropy loss term $L_{xent}$. For instance, the cross-entropy loss term $L_{xent}$ in the present embodiment is calculated based on the surface pixels map spm as:

$$L_{xent} = -\frac{1}{N}\sum_{n=1}^{N}(1 - c^n)\log(1 - \hat{c}^n) + c^n\log(\hat{c}^n)$$

where N is the number of pixels in the scene image; $c^n$ and $\hat{c}^n$ can be either equal to 0 or 1 and are respectively the true and the estimated class labels, respectively, for the $n^{th}$ training example. Note that the above equations do not use explicit weighting of the two losses $L_{xent}$ and $L_R$ (only a normalization for the reconstruction loss $L_R$), since both losses are of a similar scale in normal conditions.

In addition, the reconstruction term $L_R$ is calculated as follows:

$$L_R = \frac{1}{|M_s|}\sum_{x,y}\max[\,0, Err\,(x,y)_{si,rsi} - \xi\,]\,M_s^{x,y} + \frac{1}{|M_{ns}|}\sum_{x,y}\max[\,0, 1 -$$

$$Err\,(x,y)_{si,rsi} - \xi\,]\,M_{ns}^{x,y}$$

where $M_s$ and $M_{ns}$ are binary masks respectively for the surface pixels and the non-surface pixels. |M| corresponds to the number of non-zero elements. $\xi$ is a slack variable to improve convergence.

More broadly, the value of the reconstruction term $L_R$ may be obtained by any function which minimizes the reconstruction error for the surface (or road) pixels, and conversely maximizes the reconstruction error for the other pixels, the 'non-surface' (or non-road) pixels.

In order to train the surface identification system DSIS, a training dataset is prepared beforehand.

Advantageously, any dataset used for instance to train the semantic segmentation module (SM) can be used to train the surface identification system. For instance, for training the surface identification system of the present embodiment, the 'CityScapes' dataset (see Ref.[5]) which classifies pixels of road surfaces into 19 classes can be used.

To prepare the training, in the training dataset, for each scene image si, all the pixels classified by the segmentation module SM in a class corresponding to a road surface are labelled as surface pixels, while the other pixels are labelled as non-road, that is, non-surface, pixels.

After this preliminary operation, the surface identification system can be trained. The training is therefore performed essentially on the basis of the dataset used for semantic segmentation.

Such a dataset normally comprises a huge number of images clearly distinguishing regions of the image showing the road from regions of the image showing the sides of the road (e.g., the curb, the pavement, the surrounding fields or buildings, etc.), which correspond to non-road or non-surface pixels. Such dataset can therefore be used to train efficiently a segmentation module - or a surface identification system according to the present disclosure to distinguish the road regions from the sides of the road.

However, such a dataset is biased, in that it comprises very few (if any) images showing isolated objects lying on the road surface itself.

A consequence of this bias, that is, of the quasi-absence of images showing isolated objects lying on the road surface itself is that in most cases, segmentation modules trained on such datasets tend to predict roads - or more generally, surfaces - as 'compact' regions, that is, regions without "holes", which do not contain any non-surface pixel inside the road surface.

To address this problem, it has appeared that data augmentations can be used, and strongly improve the performance of the surface identification system to detect objects - or any 'unknown stuff' - on the surface, preventing the pixels representing these subjects to be erroneously classified as surface pixels. In the case of the surface of a road, such objects can be for instance a bottle, a bag or a tree branch fallen on the road.

Moreover, advantageously such augmentations can be easily generated based on any scene image.

In this purpose, first the pixels of the scene image are classified as surface pixels and non-surface pixels. This can be done by the segmentation module of the image analyser, or more broadly by any segmentation module capable of distinguishing surface pixels from non-surface pixels.

Then, one or more augmentation(s) of the considered scene image can be created. Each of these augmentation(s) is an image, created based on the initial scene image by replacing one or more region(s) of the scene image by sub-image(s) which do not represent the surface. In addition, a mask image (or any suitable data structure) is generated to store the information that said at least one region of the surface is composed of non-surface pixels.

An example of such augmentation is illustrated by Fig.3. Although in this example, pixels representing the road surface are replaced by non-surface pixels in only one region of the scene image, it should be understood that an augmentation can be created by performing such replacement in two or more regions of the image.

First, a polygonal (or any random outer) closed contour c is created (Fig.3(a)). Then, this contour c is duplicated into two contours sc and dc: The first contour constitutes a source contour sc positioned on a region of the scene image which does not comprise surface pixels (road pixels); the second contour constitutes a destination contour dc positioned on a region of the scene image which comprises surface pixels, and preferably positioned on a region entirely situated on the road surface.

The source contour sc is then used as a cropping mask: The 'source region' of the scene image located inside the source contour is copied and pasted into the region defined by the destination contour dc, called the destination region dr. Consequently, the pixels inside the destination contour dc (also called 'destination pixels') are replaced by non-surface pixels. By performing this copy/paste operation, an augmentation, that is, an augmented scene image asi, is obtained (Fig.3(b)).

As an alternative, instead of replacing the destination pixels by pixels of the region inside the source contour sc, the destination pixels can be replaced by pixels having random values, or forming a random pattern (of course, the new values of the destination pixels must be chosen so as not to represent a road surface).

As another alternative, the destination pixels can be replaced by a small synthetic image, constituting a realistic rendering of a real object (a bottle, a plastic bag, a tree branch, etc.) lying on the considered surface.

In parallel, a mask image mi is created (Fig.3(c)).

Fig.3(c) shows a mask image obtained on the basis of the segmentation map sm.

In the present embodiment, the segmentation module SM is configured to classify the scene image pixels into one surface category 'rd' for the pixels deemed to represent the road surface, and three non-surface categories, corresponding respectively to the ego-vehicle ev, the environment env, and the sky sk.

The mask image mi is obtained by replacing, in the segmentation map sm, the pixels of the destination region dr by the value (shown in dark grey) representing the environment category env. The mask image mi therefore stores the information that the destination region dr inside the destination contour dc is composed of non-surface pixels. Please note that the destination contour dc is shown on mask image mi only just to highlight the destination region dr and facilitate the understanding.

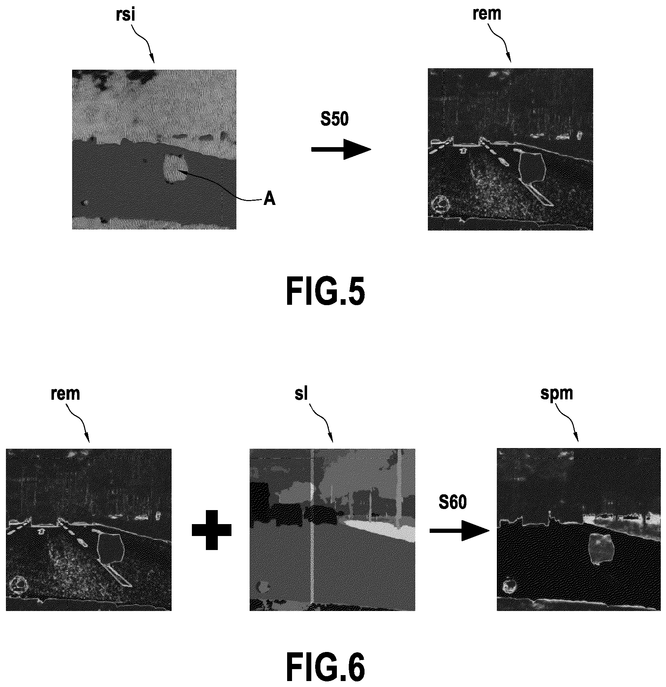

The use of augmentations during training is illustrated by Figs.5 and 6.

As explained above, the training dataset in many cases comprises a very small number of images showing anomalies located on the surface itself. To correct this bias and properly train the image analysis system to handle such cases, augmentations are used as follows.

When a scene image si of the training dataset is used for training, it is first used itself to train the surface identification system DSIS: It is inputted to the analyser, and then backpropagation is performed based on the output of the forward pass so as to update the weights of system DSIS.

In addition, one or more augmentations are then calculated on the fly, based on the scene image si. For instance, an augmented scene image asi (using the same procedure as the one described in relation with Fig.3) is created by pasting on a region of the scene image which represents the road a region of the scene image which does not represent the road. The pasted region therefore constitutes an anomaly A on the road surface, which should be detected as such by the surface identification system DSIS.

The augmented scene image asi is inputted to system DSIS, and then backpropagation is performed based on the output of this forward pass, and the weights of system DSIS are updated.

During this forward pass, based on the augmented scene image asi, a reconstructed scene image rsi is calculated. At step S50 this image rsi is inputted to the comparison unit X which calculates the reconstruction error map rem (Fig.5).

As explained before, the information about the presence of the anomaly A in the augmented scene image asi is recorded (in the mask image mi). Consequently, not only the reconstructed scene image rsi, but also the reconstruction error map rem clearly show the anomaly A.

Then, at step S70, the reconstruction error map rem and the segmentation logits sl are then combined to calculate the surface pixels map spm (Fig.6).

During backpropagation, the presence of the anomaly A in the reconstruction error map rem is taken into account in the reconstruction term $L_R$ of the loss function L. That is, the loss function L penalizes the identification system DSIS if a non-surface region (or non-surface pixels), such as anomaly A, is not detected.

Consequently, the system DSIS learns to classify the pixels of non-surface regions located inside the surface of the road such as anomaly A as non-surface regions or pixels, even if (as shown by the sl image of Fig.6) these regions or anomalies are not detected as non-surface regions in the segmentation logits sl (which may happen in particular for anomalies placed inside the road surface and not connected to any side of the road, which consequently are often not correctly classified as non-surface regions by segmentation module SM).

Advantageously, by carrying out such training on a large number of augmentations, the surface identification system DSIS learns to detect anomalies (non-surface regions) such as anomaly A located in an inner part of the surface of the road. Ultimately, system DSIS efficiently detects such anomalies and tends to output surface pixels maps similar to surface pixels map spm shown on Fig.6, on which the anomaly A is duly detected, and its pixels are duly classified as non-surface pixels.

Using the methods of the present disclosure, quantitative results have been obtained on three standard and one derivative datasets: The Lost-and-found dataset (see Ref.[10]), the Road Anomaly dataset (see Ref.[9]), the Road Obstacles dataset (see Ref.[8]) and the FishyScapes:LaF dataset (see Ref.[10]). For these datasets, the proposed method as implemented by the proposed surface identification system DSIS outperforms the current state-of-the-art methods, and often by a large margin.

A comparison of the method of the present disclosure as implemented by system DSIS, with state of the art image classification methods is illustrated by the table below.

This table shows average results, averaged over the four test datasets listed above. In the column AP, each figure represents the average precision of the considered method. In the column FRP, each figure represents the false positive rate at the operating point of 95% true positive rate.

The left two columns indicate the considered method.

In the left-most column, SDC-Net, RBM, Resynthesis, Outlier Det., Erase refer respectively to the scene image classification methods described by Refs.[12], [6], [9], [2] and [8].

In the second column:

'Softmax' means that the results are based on the final output (the segmentation map) of the SDC-Net, obtained by applying the standard softmax normalization was applied to the segmentation logits;
'Logits' means that the results are based on the segmentation logits sl, to which no normalization function has been applied.
'BayseSegNet' and 'PSPNet' are two variants of the classification method proposed by Ref.[9].
'Combined prop' 'random size patches' and 'fixed size patches' are variants of the classification method proposed by Ref.[2].
'Resnet101' refers to the 'Resnet' neural network described in Ref.[7], and means that the results are based on an implementation in which the segmentation encoder SE is based on a Resnet101. However, different backbones were tested for the segmentation encoder, and it was concluded the specific architecture of the segmentation encoder has little impact on the performance of the classification method.
The semantic segmentation performance is tested on the Cityscapes validation set (see Ref.[5]). More precisely, the semantic segmentation performance is tested with a segmentation encoder SE having a Resnet 101 architecture, using two checkpoints (checkpoints 1 and 2) with different mIoU performance, namely 51.6 and 66.1, 'mIoU' being the mean Intersection over Union).

| Method | | AP | FPR |
|---|---|---|---|
| SDC-Net | softmax | 18.8 | 81.9 |
| | logits | 36.1 | 87.2 |
| RBM | | 22.5 | 87.3 |
| Resynthesis | BayseSegNet | 58.9 | 40.2 |
| | PSPNet | 66.3 | 24.9 |
| Outlier Det. | combined prop. | 68.2 | 14.9 |
| | random size patches | 65.8 | 14.0 |

(continued)

| Method | | AP | FPR |
|---|---|---|---|
| | fixed size patches | 40.7 | 51.0 |
| Erase | | 78.5 | 15.5 |
| SIA | ResNet 101 - checkpoint 1 | 82.9 | 5.1 |
| | ResNet 101 - checkpoint 2 | 83.7 | 4.4 |

As shown by the above results, the proposed method achieves state-of-art performance or better than state of the art performance while reducing the false positives significantly, and typically has the highest average precision for a wide range of operation points.

Although the present disclosure herein has been described with reference to particular embodiments, it is to be understood that these embodiments are merely illustrative of the principles and applications of the present disclosure.

In particular, although the methods and systems according to the present disclosure have been presented in the case of the control of a vehicle, the present disclosure can be applied to a broad variety of devices. It can be applied for instance to any kind of vehicle (ground, marine vehicle, aircraft, ..), to industrial machines or robots, etc.

It is intended that the specification and examples be considered as exemplary only, with a true scope of the disclosure being indicated by the following claims.

**Claims**

1. A computer-implemented surface identification method for identifying which pixels of a scene image (si) showing a scene are surface pixels which represent a surface shown in the scene image,
   the method comprising:

   S10) inputting the scene image (si);
   S20) encoding the scene image (si) into a segmentation latent feature (slf), using a segmentation encoder (SE) which is a neural network;
   S30) based on the segmentation latent feature (slf), predicting a segmentation constituted of non-normalized segmentation logits (sl) using a segmentation decoder (SD) which is a neural network, the segmentation (sl) being a datum classifying pixels of the scene image into predetermined categories, the categories being such that surface pixels are classified in at least one surface category which represents the surface and non-surface pixels are classified in non-surface categories which do not represent the surface;
   S40) based on the segmentation latent feature (slf), calculating a reconstructed scene image (rsi) using a neural network-based reconstruction module (RM), wherein, a reconstruction error (Err) being a per-pixel error between a reconstructed scene image (rsi) outputted by the reconstruction module (RM) based on a scene image (si) and the scene image (si), the reconstruction module is trained so as to minimize the reconstruction errors (Err) for the surface pixels and to maximize the reconstruction errors (Err) for the non-surface pixels;
   S50) based on the scene image (si) and the reconstructed scene image (rsi), calculating a reconstruction error map (rem) representing the reconstruction errors (Err) between the reconstructed scene image (rsi) and the scene image (si);
   S60) based on the segmentation logits (sl) output by the segmentation decoder (DE) and the reconstruction error map (rem), calculating a surface pixels datum (spm) in which the surface pixels of the scene image (ri) are identified or based on which the surface pixels can be identified.

2. The surface identification method according to claim 1, wherein at the reconstruction error map calculation step (S50), the reconstruction error (Err) for a pixel (x,y) is calculated by comparing pixel values for a first sub-image of the reconstructed scene image (rsi) centered on the considered pixel (x,y) and pixel values for a corresponding, second sub-image of the scene image (si) also centered on the considered pixel (x,y).

3. The surface identification method according to claim 1 or 2, wherein during the reconstructed scene image calculation step (S40), a differentiable trainable transformation is performed, which includes spatial pyramid pooling.

4. The surface identification method according to any one of claims 1 to 3, wherein during the reconstructed scene image calculation step (S40), a differentiable trainable transformation is performed, which includes atrous convolutions.

5. A computer-implemented training method for training a surface identification system (DSIS) to perform the surface identification method according to any one of claims 1 to 4, wherein the surface identification system (DSIS) comprises a neural network-based semantic coupling module (SCM) configured to perform the surface pixels datum calculation step (S60); and the training method comprises performing joint end-to-end training of the reconstruction module (RM) and the semantic coupling module (SCM).

6. The training method according to claim 5, wherein the surface identification system (DSIS) comprises a neural network-based segmentation module (SM), configured during step S20, to encode the scene image (si) into the segmentation latent feature (slf), and during step S30, to predict the segmentation (sl); and during said joint end-to-end training step, the segmentation module (SM) is frozen.

7. The training method according to claim 5 or 6, wherein the training step is performed using at least an augmented scene image (asi), which is an image based on the scene image (si) and in which in at least one region representing the surface, the pixels of said at least one region have been replaced by pixels which do not represent the surface, the end-to-end training step further using information that said at least one region of the surface is composed of non-surface pixels.

8. The training method according to any one of claims 5 to 7, wherein the end-to-end training step is performed using a loss function L comprising a reconstruction loss term $L_R$ calculated based on the reconstruction error map (rem).

9. The training method according to claim 8, wherein the reconstruction loss term ($L_R$) is defined so as during training, to minimize the reconstruction errors (Err) for surface pixels and to maximize the reconstruction errors (Err) for non-surface pixels.

10. The training method according to any one of claims 5 to 9, wherein the end-to-end training step is performed using a loss function L comprising a cross entropy loss term ($L_{xent}$).

11. One or more computer program(s) comprising instructions which, when the instructions are executed by a computer, cause the computer to carry out the steps of a surface identification method according to any one of claims 1 to 5, or the steps of a training method according to any one of claims 5 to 10.

12. A non-transitory computer readable medium, having the one or more computer program(s) according to claim 11 stored thereon.

13. A surface identification system (DSIS) for classifying pixels of a scene image (si) showing a surface (S) into surface pixels which represent the surface and non-surface pixels which do not represent the surface, wherein

the identification system (DSIS) comprises one or more processors (12) and a computer-readable medium (11); the computer-readable medium (11) comprises computer instructions stored therein, wherein the instructions, when executed by the one or more processors, cause the one or more processors to carry out the steps of a surface identification method according to any one of claims 1 to 4.

14. A training system (TS) for training a surface identification system (DSIS) to classify pixels of a scene image (si) showing a surface into surface pixels which represent the surface and non-surface pixels which do not represent the surface; wherein

the training system (TS) comprises one or more processors (112) and a computer-readable medium (111); the computer-readable medium (111) comprises computer instructions stored therein, wherein the instructions, when executed by the one or more processors, cause the one or more processors to carry out the steps of a training method according to any one of claims 5 to 10.

**Patentansprüche**

1. Computerimplementiertes Oberflächenidentifizierungsverfahren zum Identifizieren, welche Pixel eines Szenenbilds (si), das eine Szene zeigt, Oberflächenpixel sind, die eine in dem Szenenbild gezeigte Oberfläche darstellen, das Verfahren umfassend:

S10) Eingeben des Szenenbilds (si);

S20) Codieren des Szenenbilds (si) in ein latentes Segmentierungsmerkmal (slf) unter Verwendung eines Segmentierungscodierers (SE), der ein neuronales Netz ist;

S30), basierend auf dem latenten Segmentierungsmerkmal (slf), Vorhersagen einer Segmentierung, die aus nicht-normalisierten Segmentierungslogits (sl) besteht, unter Verwendung eines Segmentierungsdecoders (SD), der ein neuronales Netz ist, wobei die Segmentierung (sl) ein Datum ist, das Pixel des Szenenbilds in vorbestimmte Kategorien klassifiziert,

wobei die Kategorien derart sind, dass Oberflächenpixel in mindestens eine Oberflächenkategorie eingeordnet werden, die die Oberfläche darstellt, und Nicht-Oberflächenpixel in Nicht-Oberflächenkategorien eingeordnet werden, die die Oberfläche nicht darstellen;

S40) basierend auf dem latenten Segmentierungsmerkmal (slf), Berechnen eines rekonstruierten Szenenbilds (rsi) unter Verwendung eines auf einem neuronalen Netz basierenden Rekonstruktionsmoduls (RM), wobei, wenn ein Rekonstruktionsfehler (Err) ein Fehler pro Pixel zwischen einem rekonstruierten Szenenbild (rsi), das von dem Rekonstruktionsmodul (RM) basierend auf einem Szenenbild (si) und dem Szenenbild (si) ausgegeben wird, ist, das Rekonstruktionsmodul trainiert ist, um die Rekonstruktionsfehler (Err) für die Oberflächenpixel zu minimieren und um die Rekonstruktionsfehler (Err) für die Nicht-Oberflächenpixel zu maximieren;

S50) basierend auf dem Szenenbild (si) und dem rekonstruierten Szenenbild (rsi), Berechnen einer Rekonstruktionsfehlerkarte (rem), die die Rekonstruktionsfehler (Err) zwischen dem rekonstruierten Szenenbild (rsi) und dem Szenenbild (si) darstellt;

S60) basierend auf den von dem Segmentierungsdecoder (DE) ausgegebenen Segmentierungslogits (sl) und der Rekonstruktionsfehlerkarte (rem), Berechnen eines Oberflächenpixel-Datums (spm), in dem die Oberflächenpixel des Szenenbilds (ri) identifiziert werden oder auf dessen Grundlage die Oberflächenpixel identifiziert werden können.

2. Oberflächenidentifizierungsverfahren nach Anspruch 1, wobei bei dem Rekonstruktionsfehlerkarten-Berechnungsschritt (S50) der Rekonstruktionsfehler (Err) für ein Pixel (x, y) berechnet wird, indem Pixelwerte für ein erstes Teilbild des rekonstruierten Szenenbilds (rsi), das auf das betrachtete Pixel (x, y) zentriert ist, und Pixelwerte für ein entsprechendes zweites Teilbild des Szenenbilds (si), das ebenfalls auf das betrachtete Pixel (x, y) zentriert ist, verglichen werden.

3. Oberflächenidentifizierungsverfahren nach Anspruch 1 oder 2, wobei während des Berechnungsschritts für rekonstruiertes Szenenbild (S40) eine differenzierbare trainierbare Transformation durchgeführt wird, die ein räumliches Pyramiden-Pooling beinhaltet.

4. Oberflächenidentifizierungsverfahren nach einem der Ansprüche 1 bis 3, wobei während des Berechnungsschritts für rekonstruiertes Szenenbild (S40) eine differenzierbare trainierbare Transformation durchgeführt wird, die atroide Faltungen beinhaltet.

5. Computerimplementiertes Trainingsverfahren zum Trainieren eines Oberflächenidentifizierungssystems (DSIS), um das Oberflächenidentifizierungsverfahren nach einem der Ansprüche 1 bis 4 durchzuführen, wobei das Oberflächenidentifizierungssystem (DSIS) ein auf einem neuronalen Netz basierendes semantisches Kopplungsmodul (SCM) umfasst, das konfiguriert ist, um den Oberflächenpixel-Datum-Berechnungsschritt (S60) durchzuführen; und das Trainingsverfahren ein Durchführen eines gemeinsamen End-to-End-Trainings des Rekonstruktionsmoduls (RM) und des semantischen Kopplungsmoduls (SCM) umfasst.

6. Trainingsverfahren nach Anspruch 5, wobei das Oberflächenidentifizierungssystem (DSIS) ein auf einem neuronalen Netz basierendes Segmentierungsmodul (SM) umfasst, das während Schritt S20 konfiguriert ist, um das Szenenbild (si) in das latente Segmentierungsmerkmal (slf) zu codieren, und während Schritt S30, um die Segmentierung (sl) vorherzusagen; und während dem gemeinsamen End-to-End-Trainingsschritt das Segmentierungsmodul (SM) eingefroren wird.

7. Trainingsverfahren nach Anspruch 5 oder 6, wobei der Trainingsschritt unter Verwendung mindestens eines erweiterten Szenenbilds (asi) durchgeführt wird, das ein Bild ist, das auf dem Szenenbild (si) basiert und in dem in mindestens einem Bereich, der die Oberfläche darstellt, die Pixel des mindestens einen Bereichs durch Pixel ersetzt wurden, die die Oberfläche nicht darstellen, wobei der End-to-End-Trainingsschritt ferner Informationen verwendet, dass der mindestens eine Bereich der Oberfläche aus Nicht-Oberflächenpixeln besteht.

8. Trainingsverfahren nach einem der Ansprüche 5 bis 7, wobei der End-to-End-Trainingsschritt unter Verwendung einer Verlustfunktion L durchgeführt wird, die einen Rekonstruktionsverlustterm $L_R$ umfasst, der basierend auf der Rekonstruktionsfehlerkarte (rem) berechnet wird.

9. Trainingsverfahren nach Anspruch 8, wobei der Rekonstruktionsverlustterm ($L_R$) definiert ist, um während des Trainings die Rekonstruktionsfehler (Err) für Oberflächenpixel zu minimieren und die Rekonstruktionsfehler (Err) für Nicht-Oberflächenpixel zu maximieren.

10. Trainingsverfahren nach einem der Ansprüche 5 bis 9, wobei der End-to-End-Trainingsschritt unter Verwendung einer Verlustfunktion L durchgeführt wird, umfassend einen Kreuzentropie-Verlustterm ($L_{xent}$).

11. Ein oder mehrere Computerprogramm(e), umfassend Anweisungen, die, wenn die Anweisungen von einem Computer ausgeführt werden, den Computer veranlassen, die Schritte eines Oberflächenidentifizierungsverfahrens nach einem der Ansprüche 1 bis 5 oder die Schritte eines Trainingsverfahrens nach einem der Ansprüche 5 bis 10 durchzuführen.

12. Nicht-transitorisches rechnerlesbares Medium, auf dem das eine oder die mehreren Rechnerprogramme nach Anspruch 11 gespeichert sind.

13. Oberflächenidentifizierungssystem (DSIS) zum Klassifizieren von Pixeln eines Szenenbilds (si), das eine Oberfläche (S) zeigt, in Oberflächenpixel, die die Oberfläche darstellen, und Nicht-Oberflächenpixel, die die Oberfläche nicht darstellen, wobei das Identifikationssystem (DSIS) einen oder mehrere Prozessoren (12) und ein computerlesbares Medium (11) umfasst;

das computerlesbare Medium (11) darauf gespeicherte Computeranweisungen umfasst, wobei die Anweisungen, wenn sie von dem einen oder den mehreren Prozessoren ausgeführt werden, den einen oder die mehreren Prozessoren veranlassen, die Schritte eines Oberflächenidentifizierungsverfahrens nach einem der Ansprüche 1 bis 4 durchzuführen.

14. Trainingssystem (TS) zum Trainieren eines Oberflächenidentifizierungssystems (DSIS), um Pixel eines Szenenbilds (si) zu klassifizieren, das eine Oberfläche zeigt, in Oberflächenpixel, die die Oberfläche darstellen, und Nicht-Oberflächenpixel, die die Oberfläche nicht darstellen, wobei

wobei das Trainingssystem (TS) einen oder mehrere Prozessoren (112) und ein computerlesbares Medium (111) umfasst;
das computerlesbare Medium (111) darauf gespeicherte Computeranweisungen umfasst, wobei die Anweisungen, wenn sie von dem einen oder den mehreren Prozessoren ausgeführt werden, den einen oder die mehreren Prozessoren veranlassen, die Schritte eines Trainingsverfahrens nach einem der Ansprüche 5 bis 10 durchzuführen.

**Revendications**

1. Procédé d'identification de surface mis en œuvre par ordinateur pour identifier quels éléments d'image d'une image de scène (si) montrant une scène sont des éléments d'image de surface qui représentent une surface montrée dans l'image de scène,

le procédé comprenant :

S10) entrée de l'image de scène (si) ;
S20) codage de l'image de scène (si) dans une caractéristique latente de segmentation (slf), en utilisant un encodeur de segmentation (SE) qui est un réseau neuronal ;
S30) sur la base de la caractéristique latente de segmentation (slf), prédiction d'une segmentation constituée de logits de segmentation non-normalisés (sl) en utilisant un décodeur de segmentation (SD) qui est un réseau neuronal, la segmentation (sl) étant une donnée classant des éléments d'image de l'image de scène en catégories prédéterminées, les catégories étant telles que des éléments d'image de surface sont classés dans au moins une catégorie de surface qui représente la surface et des éléments d'image pas de surface sont classés dans des catégories pas de surface qui ne représentent pas la surface ;
S40) sur la base de la caractéristique latente de segmentation (slf), calcul d'une image de scène reconstruite (rsi) en utilisant un module de reconstruction basé sur un réseau neuronal (RM), selon lequel, une erreur de reconstruction (Err) étant une erreur par élément d'image entre une image de scène reconstruite (rsi) délivrée par le module de reconstruction (RM) sur la base d'une image de scène (si) et l'image de scène (si), le module de reconstruction est entraîné de façon à minimiser les erreurs de reconstruction (Err) pour les éléments d'image de surface et pour maximiser les erreurs de reconstruction (Err) pour les éléments d'image pas de surface ;

S50) sur la base de l'image de scène (si) et de l'image de scène reconstruite (rsi), calcul d'une carte d'erreur de reconstruction (rem) représentant les erreurs de reconstruction (Err) entre l'image de scène reconstruite (rsi) et l'image de scène (si) ;

S60) sur la base des logits de segmentation (sl) délivrés par le décodeur de segmentation (DE) et de la carte d'erreur de reconstruction (rem), calcul d'une donnée d'éléments d'image de surface (spm) dans laquelle les éléments d'image de surface de l'image de scène (ri) sont identifiés ou sur la base de laquelle les éléments d'image de surface peuvent être identifiés.

2. Procédé d'identification de surface selon la revendication 1, selon lequel, à l'étape de calcul de carte d'erreur de reconstruction (S50), l'erreur de reconstruction (Err) pour un élément d'image (x, y) est calculée en comparant des valeurs d'élément d'image pour une première sous-image de l'image de scène reconstruite (rsi) centrée sur l'élément d'image considéré (x, y) et des valeurs d'élément d'image pour une deuxième sous-image correspondante de l'image de scène (si) également centrée sur l'élément d'image considéré (x, y).

3. Procédé d'identification de surface selon la revendication 1 ou 2, selon lequel, pendant l'étape de calcul d'image de scène reconstruite (S40), une transformation pouvant être entraînée et différentiée est réalisée, qui comprend un regroupement en pyramide spatiale.

4. Procédé d'identification de surface selon l'une quelconque des revendications 1 à 3, selon lequel, pendant l'étape de calcul d'image de scène reconstruite (S40), une transformation pouvant être entraînée et différentiée est exécutée, qui comprend des convolutions à trous.

5. Procédé d'entraînement mis en œuvre par ordinateur pour entraîner un système d'identification de surface (DSIS) pour exécuter le procédé d'identification de surface selon l'une quelconque des revendications 1 à 4, selon lequel le système d'identification de surface (DSIS) comprend un module de couplage sémantique basé sur un réseau neuronal (SCM) configuré pour réaliser l'étape de calcul de donnée d'éléments d'image de surface (S60) ; et le procédé d'entraînement comprend la réalisation d'un entraînement conjoint de bout en bout du module de reconstruction (RM) et du module de couplage sémantique (SCM).

6. Procédé d'entraînement selon la revendication 5, selon lequel le système d'identification de surface (DSIS) comprend un module de segmentation basé sur un réseau neuronal (SM), configuré pendant l'étape S20, pour encoder l'image de scène (si) en caractéristique latente de segmentation (slf), et pendant l'étape S30, pour prédire la segmentation (sl) ; et pendant ladite étape d'entraînement conjoint de bout en bout, le module de segmentation (SM) est figé.

7. Procédé d'entraînement selon la revendication 5 ou 6, selon lequel l'étape d'entraînement est réalisée en utilisant au moins une image de scène augmentée (asi), qui est une image basée sur l'image de scène (si) et dans laquelle, dans au moins une zone représentant la surface, les éléments d'image de ladite au moins une zone ont été remplacés par des éléments d'image qui ne représentent pas la surface, l'étape d'entraînement de bout en bout utilisant en outre de l'information selon laquelle ladite au moins une zone de la surface se compose d'éléments d'image pas de surface.

8. Procédé d'entraînement selon l'une quelconque des revendications 5 à 7, selon lequel l'étape d'entraînement de bout en bout est réalisée en utilisant une fonction de perte L comprenant un terme de perte de reconstruction $L_R$ calculé sur la base de la carte d'erreur de reconstruction (rem).

9. Procédé d'entraînement selon la revendication 8, selon lequel le terme de perte de reconstruction ($L_R$) est défini de façon à, pendant l'entraînement, minimiser les erreurs de reconstruction (Err) pour des éléments d'image de surface et maximiser les erreurs de reconstruction (Err) pour des éléments d'image pas de surface.

10. Procédé d'entraînement selon l'une quelconque des revendications 5 à 9, selon lequel l'étape d'entraînement de bout en bout est réalisée en utilisant une fonction de perte L comprenant un terme de perte d'entropie croisée ($L_{xent}$).

11. Un ou plusieurs programmes informatiques comprenant des instructions qui, quand les instructions sont exécutées par un ordinateur, amènent l'ordinateur à mettre en œuvre les étapes d'un procédé d'identification de surface selon l'une quelconque des revendications 1 à 5, ou les étapes d'un procédé d'entraînement selon l'une quelconque des revendications 5 à 10.

12. Support non-transitoire lisible par ordinateur, ayant les un ou plusieurs programmes informatiques selon la revendication 11 stockés dedans.

13. Système d'identification de surface (DSIS) pour classer des éléments d'image d'une image de scène (si) montrant une surface (S) en éléments d'image de surface qui représentent la surface et éléments d'image pas de surface qui ne représentent pas la surface, dans lequel

le système d'identification (DSIS) comprend un ou plusieurs processeurs (12) et un support lisible par ordinateur (11) ;
le support lisible par ordinateur (11) comprend des instructions d'ordinateur stockées dedans, les instructions, lorsqu'elles sont exécutées par les un ou plusieurs processeurs, amenant les un ou plusieurs processeurs à mettre en œuvre les étapes d'un procédé d'identification de surface selon l'une quelconque des revendications 1 à 4.

14. Système d'entraînement (TS) pour entraîner un système d'identification de surface (DSIS) afin de classer des éléments d'image d'une image de scène (si) montrant une surface en éléments d'image de surface qui représentent la surface et éléments d'image pas de surface qui ne représentent pas la surface ; dans lequel

le système d'entraînement (TS) comprend un ou plusieurs processeurs (112) et un support lisible par ordinateur (111) ;
le support lisible par ordinateur (111) comprend des instructions d'ordinateur stockées dedans, les instructions, lorsqu'elles sont exécutées par les un ou plusieurs processeurs, amènent les un ou plusieurs processeurs à mettre en œuvre les étapes d'un procédé d'entraînement selon l'une quelconque des revendications 5 à 10.

**FIG.1**

**FIG.2**

**FIG.3**

S10) Input the surface image (si)

S20) Encode the surface image (si) into a segmentation latent feature (slf)

S30) Predict segmentation logits (sl)

S40) Calculate a reconstructed surface image (rsi)

S42) Perform differentiable trainable transformation to calculate reconstruction latent feature (rlf)

S44) Calculate the reconstructed surface image (rsi) based on the reconstruction latent feature (rlf)

S50) Calculate reconstruction error map (rem)

S60) Calculate surface pixels map (spm)

# FIG.4

rsi

rem

S50

A

# FIG.5

rem

sl

spm

+

S60

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JINWON AN** ; **SUNGZOON CHO**. Variational auto-encoder based anomaly detection using reconstruction probability. *Special Lecture on IE*, 2015, vol. 2 (1), 1-18
- Simultaneous Semantic Segmentation and Outlier Detection in Presence of Domain Shift. **PETRA BEVANDIC** ; **IVAN KRESO** ; **MARIN ORSIC** ; **SINISA SEGVIC**. Pattern Recognition. Springer International Publishing, 2019, 33-47
- **H. BLUM** ; **P. SARLIN** ; **J. NIETO** ; **R. SIEGWART** ; **C. CADENA**. Fishyscapes: A Benchmark for Safe Semantic Segmentation in Autonomous Driving. *2019 IEEE/CVF International Conference on Computer Vision Workshop (ICCVW)*, 2019, 2403-2412
- **L. CHEN** ; **G. PAPANDREOU** ; **I. KOKKINOS** ; **K. MURPHY** ; **A. L. YUILLE**. DeepLab: Semantic Image Segmentation with Deep Convolutional Nets, Atrous Convolution, and Fully Connected CRFs. *IEEE Trans. Pattern Anal. Mach. Intell.*, 2018, vol. 40 (4), 834-848
- **M. CORDTS** ; **M. OMRAN** ; **S. RAMOS** ; **T. REHFELD** ; **M. ENZWEILER** ; **R. BENENSON** ; **U. FRANKE** ; **S. ROTH** ; **B. SCHIELE**. The Cityscapes Dataset for Semantic Urban Scene Understanding. *IEEE Conf. Comput. Vis. Pattern Recog.*, 2016
- **C. CREUSOT** ; **A. MUNAWAR**. Real-time small obstacle detection on highways using compressive RBM road reconstruction. *IEEE Intelligent Vehicles Symposium (IV)*, 2015, 162-167

- **K. HE** ; **X. ZHANG** ; **S. REN** ; **J. SUN**. Deep Residual Learning for Image Recognition. *IEEE Conf. Comput. Vis. Pattern Recog.*, 2016, 770-778
- **KRZYSZTOF LIS** ; **SINA HONARI** ; **PASCAL FUA** ; **MATHIEU SALZMANN**. *Detecting Road Obstacles by Erasing Them*, 2020
- **K. LIS** ; **K. NAKKA** ; **P. FUA** ; **M. SALZMANN**. Detecting the Unexpected via Image Resynthesis. *Int. Conf. Comput. Vis*, October 2019
- **P. PINGGERA** ; **S. RAMOS** ; **S. GEHRIG** ; **U. FRANKE** ; **C. ROTHER** ; **R. MESTER**. Lost and Found: detecting small road hazards for self-driving vehicles. *International Conference on Intelligent Robots and Systems (IROS)*, 2016
- **Z. WANG** ; **E. P. SIMONCELLI** ; **A. C. BOVIK**. Multiscale structural similarity for image quality assessment. *The Thirty-Seventh Asilomar Conference on Signals, Systems Computers*, 2003, vol. 2, 1398-1402
- **Y. ZHU** ; **K. SAPRA** ; **F. A. REDA** ; **K. J. SHIH** ; **S. NEWSAM** ; **A. TAO** ; **B. CATANZARO**. Improving Semantic Segmentation via Video Propagation and Label Relaxation. *IEEE Conf. Comput. Vis. Pattern Recog.*, June 2019
- **DI BIASE, GIANCARLO et al.** Pixel-wise anomaly detection in complex driving scenes.. *Proceedings of the IEEE/CVF conference on computer vision and pattern recognition*, 2021